# EUROPEAN PATENT SPECIFICATION

(11) **EP 2 525 975 B1**
(45) Date of publication and mention of the grant of the patent: **23.11.2016**
(21) Application number: 10762874.5
(22) Date of filing: 01.10.2010
(51) Int. Cl.: B32B 27/10, B65D 65/40

(54) **PACKAGING LAMINATE**
VERPACKUNGSVERBUND
STRATIFIE POUR EMBALLAGE

(30) Priority: 20.01.2010 SE 1000056
(43) Date of publication of application: 28.11.2012
(73) Proprietor: Tetra Laval Holdings & Finance S.A., 1009 Pully (CH)
(72) Inventor: OHLSSON, Fredrik, S-233 36 Svedala (SE); FORS, Emma, S-227 32 Lund (SE); PERSSON, Henrik, S-231 55 Trelleborg (SE); HALL, Linda, 23631 Höllviken (SE); GUSTAFSSON, Anna, S-224 66 Lund (SE)
(74) Representative: Sundell, Hakan Oskar Anders
(86) International application number: PCT/EP2010/006012
(87) International publication number: WO 2011/088854

(56) References cited:
- WO-A1-2008/122293
- WO-A1-2009/112255
- WO-A2-2005/007518

## Description

### TECHNICAL FIELD

The present invention relates to a packaging laminate for a packaging container, the packaging laminate comprising a core layer and outer, liquid-tight layers on both sides of the core layer, as well as a layer serving as a gas barrier and disposed between the core layer and one of the two outer, liquid-tight layers.

### BACKGROUND ART

A packaging laminate of the type described by way of introduction is used, for example, for packing and transporting milk in cushion-shaped packages of the Tetra Fino type. The prior art packaging laminate has a relatively thin core layer of paper and outer, liquid-tight coatings of polyethylene. In order to impart to the packed milk protection against oxygen gas as well, the prior art packaging laminate is supplemented with at least one additional layer of a material possessing the desired tightness attributes, normally an aluminium foil between the thin paper layer and one of the two outer, liquid-tight coatings.

From a web of the prior art packaging laminate, finished Tetra Fino packages are produced in that the web is first re-formed into a tube by both of the longitudinal edges of the web being folded towards and permanently sealed to one another in a longitudinal sealing joint or seam. The tube is filled with the pertinent food, e.g. milk, and is divided into continuous cushion-shaped packaging units by repeated transverse seals of the tube, transversely of the longitudinal direction of the tube and beneath the liquid level in the tube. The cushion-shaped packaging units are finally separated from one another by incisions or cuts in the transverse sealing zones and are then packed or stacked bundle-wise in suitable baskets, trays or similar containers for further transport and handling.

One problem inherent in cushion-shaped packages of the prior art packaging laminate is that the flexible packaging walls no seldom display wrinkles or creases occasioned by production and configuration which not only contribute in a deterioration in the aesthetic appearance of the package, but also in particularly serious cases form the embryo of cracks and crack-formations through which for example bacteria and other micro-organisms can penetrate and come into contact with the packed, oxygen gas-sensitive milk. In a worst case scenario, such cracks and crack-formations may be so large and extensive that the packed milk may leak out. On particularly sensitive packaging wall region where such configuration- and production-related creases and wrinkles are often observed is the packaging wall region at or close to the four corners of the cushion-shaped package where the substantially uniformly thick intermediate portion of the filled package gradually merges into planar edge portions or edge portions which progressively taper towards the two transversely sealed ends of the package.

The international patent application, with publication No. WO2009112255, describes a packaging laminate for liquid food packaging, comprising a paperboard core layer, a thin oxygen gas barrier layer applied onto the paperboard layer by means of liquid film coating, an intermediate layer of LDPE and a polymer substrate film coated with a thin vapour deposited layer of aluminium metal at a thickness of from 10 to 30 nm. The packaging laminate further has outer, liquid-tight and heat-sealable layers of polyolefin. This is a so-called non-foil packaging material, in which the provided oxygen barrier properties are combined from two thin, alternative barrier materials, each having lower barrier performance than aluminium foil. Such laminated materials behave very differently from the conventional foil-based materials, when used in liquid food packages as of the present invention. In the international patent application, with publication No. WO2008122293, there is a described how another type of a non-foil based laminated packaging material, i.e. a vapour deposited inorganic oxide layer, may be improved by the use of a cross-linkable, liquid top-coating to be coated onto the alternative gas barrier layer. In the international patent application, with publication No. WO2005007518, there is a described film laminate without a core paperboard layer, and having non-foil gas barrier layers from inorganic oxide coatings, which were vapour deposited onto pre-manufactured polymer films, such as PET films or the like.

### OBJECTS OF THE INVENTION

One object of the present invention is therefore to obviate the problems and drawbacks that are associated with the prior art packaging laminate.

A further object of the present invention is to realise a packaging laminate of the type described by way of introduction from which substantially cushion-shaped packages with substantially completely crack-free packaging walls may be produced.

Yet a further object of the present invention is to realise a packaging container for food, in particular milk, produced from the packaging laminate according to the present invention.

### BRIEF SUMMARY OF THE INVENTION

According to one aspect of the present invention, there will be realised a packaging laminate for a packaging container, the packaging laminate comprising a core layer and outer, liquid-tight layers on both sides of the core layer, as well as an aluminium foil serving as gas barrier and disposed between the core layer and one of the two outer, liquid-tight layers. The packaging laminate is characterised in that, between the aluminium foil serving as gas barrier and one of the two outer, liquid-tight layers, it has a load-absorbing pre-fabricated film of polyolefin in contact with the aluminium foil, said load-absorbing polyolefin film being pre-fabricated through blow moulding.

According to the present invention, it has surprisingly proved that the tendency to cracks and crack-formations that could previously be observed in connection with prior art cushion-shaped packages may simply and effectively be obviated, or in any event greatly counteracted and reduced, by means of such a load-absorbing film between the core layer and one of the two outer, liquid-tight layers in contact with the layer serving as gas barrier.

In particular, it has proved that a cushion-shaped packaging container of the packaging laminate according to the present invention is practically entirely free of cracks and crack-formations caused by wrinkles and creases and similar untightness in association with the wall regions of the package where the substantially uniformly thick intermediate portion of the package gradually merges into planar edge portions or edge portions progressively tapering towards both of the transversely sealed ends of the package.

A prefabricated polymer film is sufficiently mechanically strong and stable to withstand the outer stresses to which a cushion-shaped package may be exposed during transport and handling and may, on the other hand, readily be incorporated in the packaging laminate without unnecessarily adding to an increase in the overall production costs of the packaging laminate. Prefabricated polymer films for the packaging laminate according to the present invention may be commercially available polymer films produced by blow moulding technology. Films produced by blow moulding, in general display a stability-promoting molecular structure in which polymer molecules are oriented in two intersecting or orthogonal main directions.

The mechanically strong and stable film for use in the packaging laminate according to the present invention is a blow moulded film of polyolefin, such as polyethylene and polypropylene, more preferably a blow moulded film of a linear low density polyethylene.

The aluminium foil, in addition to displaying excellent tightness properties vis-à-vis oxygen gas, moreover renders the packaging laminate thermosealable by means of induction sealing which is a both simple and reliable, as well as rapid and effective sealing technique.

The core layer in the packaging laminate according to the present invention is a layer of paper or paperboard, in order to give an ecologically advantageous environmental footprint to the packaging laminate.

The outer, liquid-tight layers of the packaging laminate are prefabricated films and/or extruded coatings of polyolefin, whereby cushion-shaped packages will be realised in order to lead to the production of cushion-shaped packages by means of conventional thermosealing technology. Examples of one such preferred polyolefin is polyethylene, more preferably low density polyethylene. In one specific embodiment of the packaging laminate according to the present invention, at least one of the two outer, liquid-tight layers, preferably the outer layer on that side which is turned to face inwards in a packaging container produced from the packaging laminate, may be an extruded coating of a linear low density polyethylene, as will be explained in greater detail hereinbelow.

According to a further aspect of the present invention, there will be realised a cushion-shaped packaging container for a food, in particular milk.

### BRIEF DESCRIPTION OF THE ACCOMPANYING DRAWINGS

The present invention will now be described in greater detail hereinbelow, with reference to the accompanying Drawings. In the accompanying Drawings:
Fig. 1 schematically illustrates a cross section through a prior art packaging laminate;
Fig. 2 schematically illustrates a cushion-shaped packaging container produced from the prior art packaging laminate of Fig. 1; and
Fig. 3 schematically illustrates a cross section through a packaging laminate according to the present invention.

### DESCRIPTION OF PREFERRED EMBODIMENT

In order to make for greater clarity, the same reference numerals relating to the Figures for mutually corresponding parts and details have been employed throughout the accompanying Drawings.

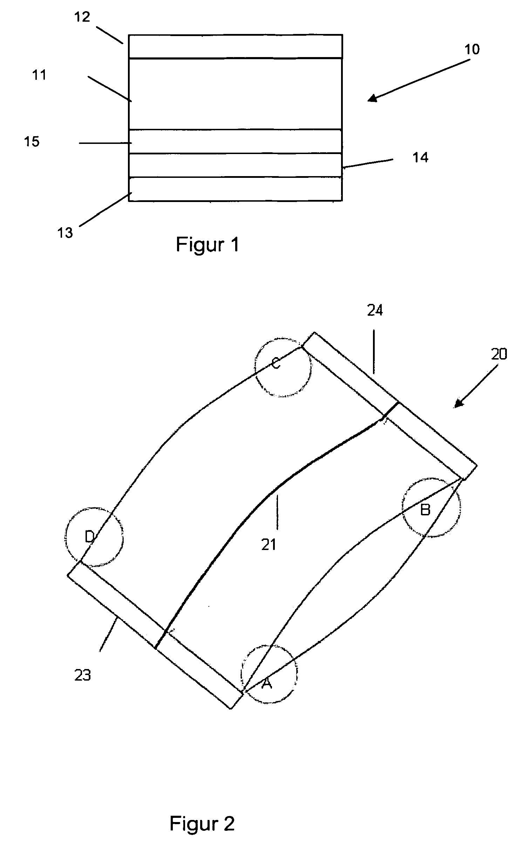

Fig. 1 schematically illustrates a cross section through a prior art packaging laminate which has been given the generic reference numeral 10. The packaging laminate 10 has a core layer 11 of paper and outer, extruded coatings 12 and 13 of polyethylene, normally low density polyethylene, on both sides of the paper layer 11. In order to impart to the packaging laminate 10 tightness properties vis-à-vis oxygen gas, the prior art packaging laminate is, in the illustrated embodiment, supplemented with at least one additional layer 14, normally an aluminium foil ('Alifoil') between the paper layer 11 and the one 13 of the two outer, liquid-tight coatings.

From a web of the packaging laminate 10, cushion-shaped packaging containers 20 of the type illustrated in Fig. 2 are produced. The web is reformed into a tube in that both longitudinal edges of the web are folded towards and permanently united with one another in a longitudinal sealing joint or seam (at 21). The tube is filled with the pertinent food, e.g. milk, and is divided into continuous cushion-shaped packaging units by repeated transverse seals transversely of the longitudinal axis of the tube and beneath the level of the contents of the tube. The continuous packaging units are separated from one another by incisions or cuts in the transverse sealing zones (22 and 23), whereafter the finished cushion-shaped packages are stacked together or on one another in suitable baskets, trays or similar containers for further transport and handling.

As has been mentioned above, wrinkles and creases are not seldom formed in certain areas conditioned by the configuration and production of the flexible packaging walls of the cushion-shaped packages 20. Particularly vulnerable areas for such creases and wrinkles are shown encircled by broken lines (A-D) in Fig. 2.

As is apparent from Fig. 2, the wrinkle- and crease-sensitive wall regions are located substantially proximal the four corner areas of the packaging container 20 where the more or less uniformly thick intermediate portion of the filled package 20 gradually merges into planar edge portions or edge portions which progressively taper towards the two transversely sealed short ends 22 and 23 of the package.

The problem with wrinkles and creases formed in the flexible packaging walls of the cushion-shaped package 20 is that, during particularly rough outer conditions, they may cause cracks and similar untightness through which not only oxygen gas but also bacteria and other harmful micro-organisms can penetrate into the package and come into contact with and destroy the sensitive food. Such cracks and similar untightness are formed, for example, in connection with the filled cushion-shaped packages being, during their transport and handling, unintentionally subjected to powerful vibration and shaking or impacts and jolts. Occasionally, or not unusually, it happens that these cracks may even become so large and extensive that the packed food, e.g. milk, leaks out and disfigures not only their own leaking package, but also immediately neighbouring packages in the packaging stack.

The risk of cracks caused by wrinkles and creases, and similar untightness in connection with cushion-shaped packages of the prior art packaging laminate may reliably and efficiently be eliminated or at least greatly reduced with the aid of a packaging laminate according to the present invention.

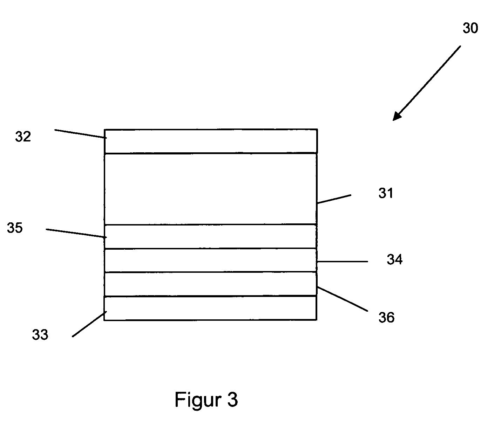

Fig. 3 schematically shows a cross section of one such substantially crack-resistant packaging laminate which has been given the generic reference numeral 30. In the illustrated embodiment, the packaging laminate 30 has a core layer 31 and outer, liquid-tight layers 32 and 33 on both sides of the core layer 31. Between the core layer 31 and one of the two outer, liquid-tight layers 33, the packaging laminate further has an aluminium foil 34 serving as gas barrier and being, via a lamination or adhesive layer 35, laminated to the one side of the core layer 31.

In order to impart mechanical strength and stability to the aluminium foil 34 serving as gas barrier, and thereby prevent or counteract the occurrence of cracks and similar untightness in this layer, the packaging laminate 30 has a film 36 serving as load absorbent between the aluminium foil 34 and one of the two outer, liquid-tight layers 33.

In one particularly preferred embodiment of the packaging laminate 30, the core layer 31 may even be a thin [50-140, preferably 70-125, more preferably 70-110 g/m²] paper layer in order thus to further contribute in increasing the advantageous environmental footprint of the packaging laminate 30.

The aluminium foil 34 serving as gas barrier, besides its excellent barrier properties to oxygen gas, moreover enjoys the advantageous property that it renders the packaging laminate 30 sealable by induction thermosealing, as was mentioned above.

Both of the outer, liquid-tight layers 32 and 33 may be either prefabricated films, extruded coatings or an optional combination of such liquid-tight layers 32 and 33. In one embodiment, the packaging laminate 30 according to the present invention has a prefabricated film on that side which is intended to be turned to face outwards in a packaging container produced from the packaging laminate 30, while the other side of the packaging laminate 30 displays an extruded liquid-tight coating.

The material for both of the outer, liquid-tight layers 32 and 33 may be extruded, prefabricated or an optional combination of extruded and prefabricated layersof polyolefin which, int. al. enjoys the advantage above other usable polymers that it is both economical and readily available and moreover renders the packaging laminate 30 thermosealable.

In one particularly preferred embodiment, both of the outer, liquid-tight layers 32 and 33 are extruded coatings of polyethylene, such as low density polyethylene and linear low density polyethylene. One such an extruded polyethylene coating enjoys the advantage over, for example, a blown or otherwise prefabricated polyethylene film that, as a result of its surface chemical attributes, it has the ability to be rapidly able to absorb, distribute and reliably retain liquid hydrogen peroxide in a thin blanket covering film over the entire surface of the packaging laminate, when, for example a web of the packaging laminate is, for example for purposes of sterilisation, led down into and through a sterilising bath of hydrogen peroxide. A packaging laminate with extrusion-coated outer polyethylene layers is, in other words, particularly usable and advantageous for the production of so-called aseptic cartons or packages in which a food is intended to be able to be stored with extended shelf-life even at ambient room temperature.

The load-absorbing film 36 in the packaging laminate according to the present invention displays sufficient mechanical strength and stability to absorb and withstand outer mechanical stresses to which a cushion-shaped package may be subjected during transport and handling and, on the other hand, may be incorporated into the packaging laminate using already existing technology and equipment so as not unnecessarily to increase the overall material and production costs of the packaging laminate.

It is a prefabricated film which is produced using conventional blow moulding technology. The film is a blow moulded film of polyolefin, e.g. polyethylene and polypropylene. In particular, the load-absorbing film may be a prefabricated multilayer film of a linear low density polyethylene. One practical example of such a multilayer film comprises a central layer of linear low density polyethylene, this layer having, on its one side an outer layer of a linear low density polyethylene and, on its other side, an outer layer of a polyolefin-based adhesive polymer, preferably polyolefin-based co- and inoculation copolymers with monomers containing carboxyl acid groups, for example (meth)acrylic acid (M)AA, maleic acid anhydride, glycide methacrylate, most preferably an ethylene acrylic acid copolymer (EAA), in order to ensure that good adhesion to an aluminium foil 34 serving as gas barrier is achieved. By means of such an adhesive, the advantage will be attained that the adhesion between the load-absorbing film and the gas barrier may be made sufficiently strong and durable to resist attack from free fatty acids which occur in certain types of foods, for example such as tomato products.

Cushion-shaped packaging containers are produced from the packaging laminate 30 according to the present invention in the manner which was described previously in connection with the prior art packaging laminate 10 in Fig. 1. A web of the packaging laminate 30 is thus reformed into a tube in that both longitudinal edges of the web are folded in towards and united to one another in a longitudinal sealing joint or seam. The tube is filled with the pertinent food, e.g. milk, and is divided into continuous cushion-shaped packaging units by repeated transverse seals of the tube transversely of the longitudinal axis of the tube and beneath the level of the contents of the tube. The cushion-shaped packaging units are separated from one another by cuts or incisions in the transverse sealing zones, whereafter the finished cushion-shaped packages are stacked beside or on one another in suitable baskets, trays and similar containers for further transport and handling.

### COMPARATIVE TEST

Cushion-shaped packages were produced using the above-described method from a web of a packaging laminate 30 according to the present invention and from a corresponding web of a packaging laminate 10 according to the prior art technology. In both cases, a first series of packages was produced with a filling volume of 500 ml and a second series of packages was produced with a filling volume of 1000 ml. The cushion-shaped packages were thereafter compared with one another and evaluated in respect of crack formations and leakages in a transport simulation test with the aid of a Gelbo Flex Tester from IDM Instruments Pty Ltd. In this comparative and evaluative test, each respective package was exposed to vibrations for 30 min., with a view to simulating transport, whereafter the packages were studied with respect to flex cracks.

The packaging laminate according to the present invention had the following laminate structure for the cushion-shaped 1000 ml and 500 ml test packages respectively, counting from the outside of the package in sequence in towards the inside of the package:
Extruded low density polyethylene;
Paper, thin;
Lamination layer of extruded low density polyethylene (LDPE);
Aluminium foil (gas barrier);
Load-absorbing film of substantially linear low density polyethylene (LLDPE) with an adhesive layer of ethylene-acrylic acid copolymer (EAA);
Extrusion-coated layer including linear low density polyethylene of metallocene catalysed type (m-LLDPE) and low density polyethylene (LDPE).

The packaging laminate according to the prior art technology had the following laminate structure for corresponding 1000 ml and 500 ml test packages respectively, counting from the outside of the package in sequence in towards the inside of the package:
Extruded low density polyethylene;
Paper, thin;
Lamination layer of extruded low density polyethylene (LDPE);
Aluminium foil (gas barrier);
Extrusion-coated layer including linear low density polyethylene of metallocene catalysed type (m-LLDPE) and low density polyethylene (LDPE).

After completed vibration stresses on the test packages, the number of leaking packages within the four test groups was counted. The results are presented below:

| | **Package volume, ml** | |
|---|---|---|
| **Leaking packages, %** | 500 | 1000 |
| According to invention | 0.2 | 0.6 |
| According to prior art | 1.5 | 6.7 |

From the above results, it is clearly apparent that the cushion-shaped packages produced from a packaging laminate according to the present invention better withstand external vibration stresses than corresponding cushion-shaped packages produced from a packaging laminate according to the prior art technology. It is particularly apparent that cushion-shaped packages of the packaging laminate according to the present invention are more robust and mechanically strong the smaller the volume of the package is, and that in percentage terms the number of packages leaking after the transport simulated vibration test (Gelbo Flex Tests) is as little as 0.2% i.e. in practice negligible, compared with the percentage number of leaking packages of the prior art packaging laminate.

### INDUSTRIAL APPLICATION

The packaging laminate according to the present invention is usable for producing flexible packaging containers for packaging and transporting liquid foods, e.g. milk. In particular, the packaging laminate can be employed for producing such cushion-shaped packages.

In one particular embodiment of the packaging laminate according to the present invention, usable for so-called aseptic cushion-shaped packages for liquid foods, e.g. milk, in which the food may be reliably stored with extended shelf life even at ambient room temperature, on condition that the package is not opened during storage, before intentional emptying and consumption of the packed food.

## Claims

1. A packaging laminate for a flexible, preferably cushion-shaped packaging container, the packaging laminate (30) comprising a core layer (31) of paper and outer, liquid-tight layers (32 and 33) of a polyolefin on both sides of the paper layer (31), as well as an aluminium foil (34) serving as a gas barrier and disposed between the paper layer (31) and one of the two outer, liquid-tight layers (33), **characterised in that,** between the aluminium foil (34) and one of the two outer, liquid-tight layers (33), it has a load-absorbing prefabricated film (36) of polyolefin in contact with the aluminium foil (34), said load-absorbing polyolefin film being prefabricated through blow moulding.

2. The packaging laminate as claimed in claim 1, **characterised in that** the aluminium foil (34) is laminated to the paper layer (31) by means of a lamination or adhesive layer (35).

3. The packaging laminate as claimed in any of the preceding claims, **characterised in that** both of the outer, liquid-tight layers (32 and 33) are extruded coatings of a polyolefin.

4. A cushion-shaped packaging container for liquid foods, e.g. milk, which is produced by fold forming and thermosealing of a packaging laminate as claimed in any of claims 1-3.

## Patentansprüche

1. Verpackungslaminat für einen flexiblen, vorzugsweise kissenförmigen Verpackungsbehälter, wobei das Verpackungslaminat (30) eine Kernschicht (31) aus Papier und äußere flüssigkeitsdichte Schichten (32 und 33) aus einem Polyolefin auf beiden Seiten der Papierschicht (31) umfasst sowie eine Aluminiumfolie (34), die als Gassperre dient und zwischen der Papierschicht (31) und einer der zwei äußeren flüssigkeitsdichten Schichten (33) angeordnet ist, **dadurch gekennzeichnet, dass** es zwischen der Aluminiumfolie (34) und einer der zwei äußeren flüssigkeitsdichten Schichten (33) eine lasttragende vorgefertigte Folie (36) aus Polyolefin in Kontakt mit der Aluminiumfolie (34) aufweist, wobei die lasttragende Polyolefinfolie durch Blasformen vorgefertigt ist.

2. Verpackungslaminat nach Anspruch 1, **dadurch gekennzeichnet, dass** die Aluminiumfolie (34) mittels einer Laminierung oder einer Haftstoffschicht (35) an die Papierschicht (31) laminiert ist.

3. Verpackungslaminat nach einem der vorhergehenden Ansprüche, **dadurch gekennzeichnet, dass** beide äußere flüssigkeitsdichte Schichten (32 und 33) extrudierte Beschichtungen aus einem Polyolefin sind.

4. Kissenförmiger Verpackungsbehälter für flüssige Lebensmittel, z. B. Milch, der durch Faltformen und Thermoschweißen eines Verpackungslaminats nach einem der Ansprüche 1 - 3 hergestellt wird.

## Revendications

1. Stratifié pour emballage pour un contenant d'emballage flexible, de préférence en forme de coussin, le stratifié pour emballage (30) comprenant une couche de noyau (31) en papier et des couches extérieures étanches aux liquides (32 et 33) en polyoléfine sur les deux côtés de la couche de papier (31), ainsi qu'une feuille d'aluminium (34) servant de barrière aux gaz et disposée entre la couche de papier (31) et l'une des deux couches extérieures étanches aux liquides (33), **caractérisé en ce qu'**entre la feuille d'aluminium (34) et l'une des deux couches extérieures étanches aux liquides (33), il présente un film en polyoléfine préfabriqué absorbant les charges (36) en contact avec la feuille d'aluminium (34), ledit film en polyoléfine absorbant les charges étant préfabriqué par moulage par soufflage.

2. Stratifié pour emballage selon la revendication 1, **caractérisé en ce que** la feuille d'aluminium (34) est laminée sur la couche de papier (31) par le biais d'une couche de laminage ou adhésive (35).

3. Stratifié pour emballage selon l'une quelconque des revendications précédentes, **caractérisé en ce que** les deux couches extérieures étanches aux liquides (32 et 33) sont des revêtements extrudés de polyoléfine.

4. Contenant d'emballage en forme de coussin pour des aliments liquides, par exemple du lait, qui est produit par formage par pliage et thermoscellage d'un stratifié pour emballage selon l'une quelconque des revendications 1 à 3.
